Europäisches Patentamt

European Patent Office

Office européen des brevets

(19)

(11) **EP 1 304 557 A1**

(12) **EUROPEAN PATENT APPLICATION**

(43) Date of publication:
**23.04.2003 Bulletin 2003/17**

(51) Int Cl.⁷: **G01N 15/14**

(21) Application number: **01124764.0**

(22) Date of filing: **17.10.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Lüdke, Gerd**<br>  **71088 Holzgerlingen (DE)**<br>• **Nawracala, Bernd**<br>  **76227 Karlsruhe (DE)** |
| (71) Applicant: **Agilent Technologies, Inc. (a Delaware corporation)**<br>**Palo Alto, CA 94303 (US)** | (74) Representative: **Harbach, Thomas et al**<br>**Agilent Technologies Deutschland GmbH**<br>**Patentabteilung,**<br>**Herrenbergerstrasse 130**<br>**71034 Böblingen (DE)** |

(54) **Method of performing flow cytometric measurements and apparatus for performing the method**

(57) A method of performing flow cytometric measurements is disclosed wherein cells with different properties are flowing through a detector arrangement, and wherein the numbers of cells having such properties are determined. In order to compensate for errors due to simultaneous occurrence of two or more cells with a specific property at the detector arrangement, the actual numbers of cells with a specific property are calculated from the measured values of cells with this specific property, using a statistical model about the probability of simultaneous occurrences of cells at the detector arrangement. The method is typically implemented with the help of a data processing means which receives as input data the measured cell numbers and which uses an experimentally determined coincidence rate for calculating the actual cell numbers.

EP 1 304 557 A1

**Description**

The invention relates to a method for performing flow cytometric measurements according to the preamble of claim 1 and to an apparatus for performing the method.

BACKGROUND OF THE INVENTION

Flow cytometry is a technique for measuring the properties of biological cells suspended in a fluid stream. The cells are typically analyzed by fluorescence measurements, using, for example, a laser for exciting fluorescence radiation in the cells and an optical system with a detector to detect the emitted fluorescence radiation. In order to improve the analysis of specific biological properties of the cell, it is customary to employ staining procedures to stain the cell differentially according to the biological parameter of interest. These include staining for DNA content, viability, presence of extracellular or intracellular antigens, or if the cell is undergoing apoptosis. In that way, the cells can be interrogated individually for biological information. The thus obtained information can be used to identify cells of different type, and to separate them from each other and/or to sort them. A method for performing flow cytometric measurements is known, for example, from US 5466572 wherein hematopoietec cell populations are separated to provide cell sets and subsets as viable cells and wherein high flow speeds are used to reduce the sorting time.

Since cells are often heterogeneous within a certain population, it is impossible to study only a few cells to obtain statistically relevant information about the cell population. Consequently, several hundred or thousand cells have to be measured to obtain relevant information. In practice, at least two, ideally independent, parameters are measured, so that the accuracy of the measurement is highly dependent on the ability of the flow cytometric apparatus to measure single cells individually. Several construction principles for the fluidic path have been in use to achieve the goal of measuring cells individually. According to a first construction principle, the cells are injected by an injector tip into a fluid stream flowing around the tip in the direction of the tip axis. The fluid stream carries away the cells in a narrow beam, and the detection is performed at this narrow beam of cells. In another example the fluid containing the cells is ejected from a nozzle with a very small orifice. The cells leaving the nozzle in a jet are detected by a suitable detector. In a third example, typically implemented on a microfluidic chip, the cells are transported along a main channel and a buffer solution is introduced through a side channel under an acute angle. Where the stream of buffer solution meets the cells, a constriction in the flow of the cells occurs, and the detection is performed at this constriction.

Besides appropriate construction of the fluidic system, some other measures are known to achieve that only one cell at a given point in time is visible for the detector. Such measures are:

- using a low cell concentration,
- making the detection spot very small,
- employing a high measurement frequency and a high data rate,
- analyzing the peak shapes and rejecting coincidence events.

The known methods, however, are not satisfactory in all respects. With some of the methods, it is not always possible to ensure single cell detection. Other methods require comparatively complex technical equipment and are therefore costly. None of the known methods is able to reliably exclude coincidences; they only become more improbable. Also, the method of peak rejection does not always work reliably.

SUMMARY OF THE INVENTION

It is thus an object of the invention to provide a method of performing flow cytometric measurements and a corresponding apparatus wherein cells with different properties are flowing through a detector arrangement and wherein the numbers of cells having such properties are determined, respectively, which method copes with the above mentioned problem of simultaneous detection of several cells in an easy, reliable manner with only little additional instrumental expenditure.

According to the invention, this object is met by the features of the independent claims. A method according to the preamble of claim 1 is thus characterized in that for compensating errors due to simultaneous occurrence of two or more cells with a specific property at the detector arrangement, the actual numbers of cells with a specific property are calculated from the measured values of cells with this specific property, using a statistical model about the probability of simultaneous occurrences of cells at the detector arrangement.

A flow cytometric apparatus according to the preamble of claim 8 is thus characterized by processing means configured to perform to method defined in claim 1.

With the present invention, the old approach for dealing with the simultaneous occurrence of two or more cells with a specific property at the detector by trying to ensure that only one cell at a time is present at the detector, is left. Rather, it is accepted in the present invention that there may be simultaneous occurrences, but it has been realized that the errors caused by these simultaneous occurrences follow certain statistic regularities and can thus be compensated by using an appropriate data processing algorithm. An input parameter for the statistical model is the coincidence rate or probability of simultaneous occurrence of several cells. Preferably, this coincidence rate is experimentally determined for the specific flow cytometer.

In an embodiment of the invention the statistical model used for the error compensation is based on the assumption that the detection of cells by the detector follows a Poisson distribution and that there is only simultaneous occurrence of two cells, but not of three or more cells. It has been found that these assumptions describe typical practical situations very well and lead to reliable measuring results.

Preferably, the statistical model also assumes that the probability of simultaneous occurrence of cells is not dependent on the specific properties of the cells, respectively. Such properties may be, for example, different colors with which the cells have been stained. The different colors are detected, for example, by a fluorescence detector. According to another preferred embodiment, the statistical model is based on the assumption that the signals corresponding to the specific properties of the cells measured by the detector are additive.

The above described assumptions for the statistical model can be further refined by taking into account coincidences of three or more cells. The coincidence rates are experimentally determined and are used as input parameters in the statistical model.

In the following, some embodiments of the invention will be explained in more detail.

DETAILED DESCRIPTION

According to a first embodiment of the invention a statistical model is used for correcting for coincidences of cells which takes into account cell doublets, i.e. two cells being simultaneously present at a detector, but no triplets or higher cell aggregates.

The measurement of a cell in flow cytometry is - statistically - a rare event. The probability to detect such an event in a given time follows a Poisson distribution, but not a binomial distribution. Assuming that the events are statistically independent and are occurring with a probability $Q$, wherein $Q$ is much smaller than 1, one can predict the probability of a coincidence event, dependent on $Q$.

With n being the number of cells simultaneously in the detector spot of the flow cytometer, the probability to see two events simultaneously is:

$$Q(2) = Q^2$$

For higher order coincidence events, it applies:

$$Q(n) = Q^n$$

The occurrence of coincidence events is a consequence of the Poisson distribution and contributes to the overall result of the measurement.

The coincidence rate p $(= Q^2)$ is experimentally measurable as will be explained below in more detail.

The effects of these coincidence events are of a statistical nature and, according to the invention, are corrected with the help of a mathematical model which is typically implemented as a computer program.

In the following such a model, taking into account cell doublets, will be explained in detail. The following terminology will be used.

The capital letters A, B, C, D denote the measured fractions of cells having different properties, such as different staining (e.g. red, blue, etc.). Each of these fractions is the ratio of the number of cells having the specific property and the total number of cells detected within unit time.

The small letters a, b, c, d denote the real fractions of cells of the different properties, respectively, as they would be if there were no coincidences.

The letter p denotes the probability for coincidence of two cells.

In a specific example, the cells are stained in blue and red wherein a distinction is made between faint and bright events for the two colors, respectively. According to this example, the small letters a,b,c,d mean the following:

a: faint blue / faint red
b: bright blue / faint red
c: faint blue / bright red

d: bright blue / bright red

The measured fraction A of cells with a first property is the real fraction a times the probability (1-p) that the cells do not form doublets, plus the real fraction of a times the probability that doublets of a are formed. The other fractions are formed analogously by adding the probability for singlets plus the probability for doublets. As a result, the following relations apply:

$$A = (1 - p)a + p(a^2)$$

$$B = (1 - p)b + p(b^2 + 2ab)$$

$$C = (1 - p)c + p(c^2 + 2ac)$$

$$D = (1 - p)d + p(d^2 + 2ad + 2bd + 2cd + 2bc)$$

One can solve these quadratic equations to isolate the small letters a,b,c,d, yielding the following results:

$$a = -\frac{(1-p)}{2p} + \sqrt{\left[\frac{(1-p)}{2p}\right]^2 + \frac{A}{p}}$$

$$b = -\frac{(1-p) + 2ap}{2p} + \sqrt{\left[\frac{(1-p) + 2ap}{2p}\right]^2 + \frac{B}{p}}$$

$$c = -\frac{(1-p) + 2ap}{2p} + \sqrt{\left[\frac{(1-p) + 2ap}{2p}\right]^2 + \frac{C}{p}}$$

$$d = -\frac{(1-p) + 2ap + 2bp + 2cp}{2p} + \sqrt{\left[\frac{(1-p) + 2ap + 2bp + 2cp}{2p}\right]^2 + \frac{D}{p} - 2bc}$$

In that way, one can calculate the actual (real) values out of the measured values. It is only required to know the rate p, which can be determined experimentally. Typically, the coincidence rate p is measured by using a 1:1 mixture of red and blue stained cells or beads. If this mixture is measured, a coincidence event will result in an event that is simultaneously stained red and blue. The coincidence rate p for the generation of doublets can be calculated from the measured data with the following formula:

$$p = 2 * \text{(number of coincidence events/number of all events)}$$

Besides the experimental determination of the coincidence rate, the coincidence rate could be calculated, if the probabilities for the occurrence of a single event is known. Under this condition, the overall coincidence rate with red and blue cells or beads can be calculated as follows:

$$\text{Coincidence rate} = p^2_{blue} + 2 * p_{blue} * p_{red} + p^2_{red}$$

The coincidence rate of triplets or multiplets could be calculated in an analogous way.

According to a practical example, coincidence rates for doublets and higher order multiplets can exceed 10% and even become 20% if cell densities are high.

The above described computational steps are typically performed with the help of a data processing arrangement which is connected to the flow cytometer. A computer program receives as input the number of events, of faint blue events, of bright blue events, of faint red events, of bright red events and of double bright events. Using the experimentally determined value for p, the corrected values are calculated and displayed to the user.

In the following, the assumptions in the model used in the above embodiment will be explained in more detail.

1. There are only cell doublets. Triplets or higher aggregates of cells do not occur.
2. The model only corrects for coincidence events. Physical doublets that are attached to each other do not occur.
3. Doublets are additive. This means that the coincidence of a faint and a bright event will result in a bright event and not a faint event. This means that the signal of both events will reach the detector and are integrated into one signal.
4. The probability for coincidence is not dependent on the staining of the event. This means that the probability for two red cells to generate a coincidence event is not different from the probability for two blue cells to generate a coincidence event, if both cell kinds have the same probability to occur.

It will now be examined under which conditions these assumptions are true. Assumptions 1 and 2 are limitations of the model. If one wants to correct triplets or higher order multiplets, the model has to be expanded. However, because of the statistical occurrence of the coincidence, this would be straight forward. The possible error that is introduced by a triplet is well below the error introduced by a doublet, because of the rare occurrence of triplets. If the probability for the occurrence of an event is p, the probability of the occurrence of an n-let is $p^n$.

Assumption 3 will be true for all systems where the signal emitted by one particle is not absorbed or reflected or quenched by the other particle. This is especially true for biological systems which are very transparent.

Assumption 4 will generally be true for all systems that are not modified in a way that the particles will show different affinities to each other. This means that if a blue stained cell is carrying a receptor for a ligand on a red stained cell, conditions may arise where the probability for a red-blue doublet is higher than for a red-red doublet, even if both cells show the same concentration. This, however, would be a physical doublet that is not corrected by the model (see assumption 2).

Generally, it can be said that the mentioned assumptions are reasonable for typical flow cytometric applications. It is understood, however, that in situations or with flow cytometers wherein the cells have a behavior differing from the above, a modified statistical model may be used.

The application of the model is not restricted to fluorescence detection, but is applicable to all detection methods wherein the signals are integrated over a certain time, unless the signal of a coincidence event does not exceed the dynamic range of the detector and the signal of a single event is already detectable by the detector. Therefore, the method can be used for optical detectors regardless of wavelength, for electrical detectors or detectors using radioactivity and all other detection methods wherein the signals are integrated over a certain time.

**Claims**

1. A method of performing flow cytometric measurements wherein cells with different properties are flowing through a detector arrangement, and wherein the numbers of cells having such properties are determined, respectively, **characterized in that** for compensating errors due to simultaneous occurrence of two or more cells with a specific property at the detector arrangement, the actual numbers of cells with a specific property are calculated from the measured values of cells with this specific property, using a statistical model about the probability of simultaneous occurrences of cells at the detector arrangement.

2. Method as in claim 1, wherein the statistical model is based on the assumption that there is only simultaneous occurrence of two cells, but not of three or more cells.

3. Method as in claims 1 or 2, wherein the statistical model is based on the assumption that the probability of simultaneous occurrence of cells is not dependent on the specific properties of the cells, respectively.

4. Method as in any of the claims 1 to 3, wherein the statistical model is based on the assumption that the signals corresponding to the specific properties of the cells measured by the detector arrangement are additive.

5. Method as in any of the preceding claims, wherein the specific properties of the cells are stainings with different colors.

6. Method as in any of the preceding claims, wherein the statistical model is based on the assumption that the detection of cells by the detector arrangement follows a Poisson distribution.

7. Method as in any of the claims 2 to 7, comprising the following steps:

   a) measuring the fractions (A,B,C,D) of cells having specific properties, respectively,
   b) determining, with the help of a data processing arrangement, the real fractions (a,b,c,d) of cells having said specific properties, using the experimentally determined probability (p) for simultaneous occurrence of several cells.

8. An apparatus for performing flow cytometric measurements, comprising a detector arrangement through which cells of different properties are flowing and comprising means for determining the numbers of cells having such properties,
   **characterized by** processing means configured to perform any of the methods according to claims 1 to 7.

9. Apparatus as in claim 8, wherein the detector arrangement is a fluorescence detector.

## EUROPEAN SEARCH REPORT

**European Patent Office**

**Application Number**

EP 01 12 4764

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KUDRYAVTSEV I A ET AL: "METHOD FOR RAISING THE PARTICLE CONCENTRATION DETECTION LIMIT FOR PHOTOELECTRIC SENSORS" MEASUREMENT TECHNIQUES, CONSULTANTS BUREAU. NEW YORK, US, vol. 40, no. 10, October 1997 (1997-10), pages 1017-1020, XP000835132 ISSN: 0543-1972 * the whole document * | 1-3,8 | G01N15/14 |
| A | US 4 510 438 A (AUER ROBERT) 9 April 1985 (1985-04-09) * column 2, line 10-35 * * column 3, line 31 - column 4, line 7 * | 7 | |
| X | US 3 949 197 A (BADER HENRI) 6 April 1976 (1976-04-06) * abstract * | 1,8 | |
| X | US 5 452 237 A (JONES JR WILLIAM R) 19 September 1995 (1995-09-19) * abstract; figure 4 * | 1,8 | |
| X | US 5 247 461 A (BERG ROBERT H ET AL) 21 September 1993 (1993-09-21) * abstract * | 1,8 | **TECHNICAL FIELDS SEARCHED** (Int.Cl.7)  G01N |

The present search report has been drawn up for all claims

| Place of search | Date of completion of the search | Examiner |
|---|---|---|
| THE HAGUE | 12 April 2002 | Zinngrebe, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 01 12 4764

This annex lists the patent family members relating to the patent documents cited in the above–mentioned European search report.
The members are as contained in the European Patent Office EDP file on
The European Patent Office is in no way liable for these particulars which are merely given for the purpose of information.

12-04-2002

| Patent document cited in search report | | Publication date | Patent family member(s) | | Publication date |
|---|---|---|---|---|---|
| US 4510438 | A | 09-04-1985 | DE | 3506328 A1 | 28-08-1986 |
| US 3949197 | A | 06-04-1976 | AR | 204610 A1 | 20-02-1976 |
| | | | AU | 5373673 A | 26-09-1974 |
| | | | BE | 797228 A1 | 16-07-1973 |
| | | | CA | 989480 A1 | 18-05-1976 |
| | | | CH | 592303 A5 | 31-10-1977 |
| | | | DE | 2314578 A1 | 11-10-1973 |
| | | | FR | 2186135 A5 | 04-01-1974 |
| | | | GB | 1423021 A | 28-01-1976 |
| | | | IL | 41855 A | 31-05-1977 |
| | | | IT | 1032020 B | 30-05-1979 |
| | | | JP | 1080768 C | 25-01-1982 |
| | | | JP | 49009282 A | 26-01-1974 |
| | | | JP | 56025611 B | 13-06-1981 |
| | | | NL | 7304071 A | 01-10-1973 |
| | | | SE | 391583 B | 21-02-1977 |
| | | | ZA | 7301292 A | 30-10-1974 |
| US 5452237 | A | 19-09-1995 | NONE | | |
| US 5247461 | A | 21-09-1993 | NONE | | |